# EUROPÄISCHE PATENTSCHRIFT

(11) **EP 2 265 431 B1**
(45) Veröffentlichungstag und Bekanntmachung des Hinweises auf die Patenterteilung: **25.07.2018**
(21) Anmeldenummer: 09715015.5
(22) Anmeldetag: 27.02.2009
(51) Int. Cl.: B29C 70/52

(54) **VERFORMUNGS-VORRICHTUNG ZUR HERSTELLUNG PROFILIERTER HALBZEUGE, ANLAGE MIT EINER SOLCHEN VERFORMUNGS-VORRICHTUNG UND VERFAHREN ZUR HERSTELLUNG PROFILIERTER HALBZEUGE**
SHAPING DEVICE FOR MANUFACTURING PROFILED SEMIFINISHED PRODUCTS, PLANT COMPRISING SUCH A SHAPING DEVICE, AND METHOD FOR MANUFACTURING PROFILED SEMIFINISHED PRODUCTS
DISPOSITIF DE FAÇONNAGE POUR PRODUIRE DES PRODUITS SEMI-FINIS PROFILÉS, INSTALLATION ÉQUIPÉE D'UN TEL DISPOSITIF DE FAÇONNAGE ET PROCÉDÉ DE PRODUCTION DE PRODUITS SEMI-FINIS PROFILÉS

(30) Priorität: 27.02.2008 US 31833 P; 27.02.2008 DE 102008011411
(43) Veröffentlichungstag der Anmeldung: 29.12.2010
(73) Patentinhaber: Airbus Operations GmbH, 21129 Hamburg (DE)
(72) Erfinder: LENGSFELD, Hauke, 21717 Helmste (DE); LÜBBERING, Christian, 21720 Gründendeich (DE)
(74) Vertreter: Bird & Bird LLP
(86) Internationale Anmeldenummer: PCT/EP2009/001411
(87) Internationale Veröffentlichungsnummer: WO 2009/106340

(56) Entgegenhaltungen:
- WO-A-02/06037
- DE-A1- 4 017 978
- DE-A1- 19 754 381
- FR-A- 1 126 040
- JP-A- 4 308 213
- US-A- 3 556 888
- US-A- 3 992 240
- US-A- 4 780 166
- US-A- 5 091 036
- US-A- 5 098 496
- US-A1- 2001 010 248

## Beschreibung

Die Erfindung betrifft eine Verformungs-Vorrichtung zur Verformung eines ebenen Halbzeugs in ein profiliertes Faserverbundwerkstoff(FVW)- oder Faserverbundkunststoff(FVK)-Halbzeug, eine Anlage zur Herstellung eines profilierten Faserverbundwerkstoff(FVW)-Halbzeugs aus einem Halbzeug aus Trockenfaser- oder Prepregmaterial mit einer solchen Verformungs-Vorrichtung und ein Verfahren zur Herstellung eines profilierten FVW-Halbzeugs aus einem Halbzeug aus Trockenfaser- oder Prepregmaterial, das in seiner Längsrichtung durch eine Verformungs-Vorrichtung bewegt wird.

Das für die Vorrichtung bzw. das Verfahren verwendete Halbzeug ist ein Vorprodukt für Faserverbundbauteile, wie z. B. Prepregs, Mischgewebe, im Filmstackingverfahren vorbereitete Bahnen, mit Harz getränkte oder beschichtete Gewebe oder Faserlagen oder deren Kombinationen. Das hergestellt Halbzeug kann ein fertiges FVW-Bauteil sein, das mit anderen Bauteilen zusammen gesetzt wird oder das Halbzeug kann ein Vorformling sein, das einem weiteren Verfahrensschritt, z.B. einem weiteren Umformen oder einem Härten.

Ein Pultrusionsverfahren ist ein Strangzieh-Dauerproduktionsverfahren, bei dem Halbzeuge in Form von Fasern oder Gelegen in ein Profilteil umgeformt werden. Die Fasern oder die Gelegen können vor oder in einem Pultrusionswerkzeug mit einem flüssigen Kunststoff benetzt. Dann werden die Gewebebahnen und die Fasern mit Hilfe des Pultrusionswerkzeugs, beispielsweise mittels eines Formkerns oder dergleichen, in die gewünschte Form des Profilteils geformt. Zur Aushärtung werden die geformten Fasern und Gewebebahnen mittels einer Heizeinrichtung erwärmt. Das zumindest teilweise ausgehärtete Profilteil durchläuft dann eine Zugeinrichtung, mit dessen Hilfe das Profilteil fortlaufend abgezogen wird. Das Profilteil kann schließlich in Einzelteile zersägt werden.

WO 02/06037 beschreibt einen Pultrusionskopf zur Anbringung in einer Pultrusionsvorrichtung zur kontinuierlichen Verarbeitung von Verbundprofilen mit langen Fasern. WO 02/06037 beschreibt eine Vorrichtung gemäß dem Oberbegriff des Anspruchs 1 und ein Verfahren gemäß dem Oberbegriff des Anspruchs 13. In den Dokumenten US 5 091 036, US5 098 496 and US 3 992 240 sind Vorrichtungen und Verfahren zur Pultrusion von thermoplastischen Faserstrukturen beschrieben. Aus der DE 40 17 978 A1 ist eine Vorrichtung und ein Verfahren zur Herstellung von Profilteilen aus Prepregs bekannt.

Die DE 4017978 A1 beschreibt eine Vorrichtung zur Herstellung von profilierten Teilen (Profilen PR) aus Thermoplast-Halbzeugen mit einer zwei- oder mehrteiligen Formpresse, deren Teile eine Heizzone (HZ), eine Presszone (PZ) und eine Kühlzone (KZ) bilden, wobei sich die Form des von den Teilen der Formpresse gebildeten Spalts vom Ausgangsprofil (rechteckiger Querschnitt) stetig zum gewünschten Profil (PR) ändert.

DE 19754381 A1 offenbart ein Verfahren zum Herstellen eines Profilteils, insbesondere ein Pultrusionsverfahren, bei dem fortlaufend eine Mehrzahl von Fasern und/oder eine oder mehrere Gewebebahnen mit einem flüssigen Kunststoff benetzt und entsprechend dem Profilteil geformt werden, wobei die Fasern und/oder die Gewebebahnen und/oder der flüssige Kunststoff einer Vibration ausgesetzt werden, um Lunker oder Fehlstellen in den Fasern und/oder den Gewebebahnen und/der in den Zwischenräumen aufzulösen. Die Gewebebahnen werden von Rollen oder dergleichen abgewickelt und einer Verbindungsvorrichtung zugeführt. Dieser Verbindungsvorrichtung werden auch die Fasern über weitere Führungsvorrichtungen zugeführt. Mit Hilfe der Verbindungsvorrichtung werden die Fasern und die Gewebebahnen zueinander gebracht und miteinander verknüpft. Der Verbindungsvorrichtung ist ein Werkzeug nachgeordnet, dem die verbundenen Fasern und Gewebebahnen zugeführt werden. Bei dem Werkzeug kann es sich beispielsweise um einen Formkern oder dergleichen handeln. Mit Hilfe des Werkzeugs werden die Fasern zusammen mit den Gewebebahnen geformt. Insbesondere werden die Fasern und die Gewebebahnen gefaltet. Das Werkzeug ist derart ausgestaltet, dass sich nach der Umformung der Fasern und Gewebebahnen die erwünschte Form des Profilteils ergibt.

Die WO 2007/107007 offenbart eine Pultrusionsvorrichtung, die drei thermisch voneinander isolierte thermische Zonen aufweist, mit denen ein vorgegebenes Temperaturprofil realisiert wird, um ein Halbzeug, das durch die Pultrusionsvorrichtung geführt wird, zu verformen und anschließend zu härten.

Aus der DE $0 17 978 A1 ist einr Vorrichtung und ein Verfahren zur Herstellung profilierter Teilebekannt, bei der eine Formpresse mit einer Heizzone, einer Presszone und einer Kühlzone verwende wird, wobei sich die Form des von den Teilen der Formpresse gebildeten Spalts vom Ausgangsprofil stetig zum gewünschten Profil ändert.

Aufgabe der Erfindung ist es, eine Verformungs-Vorrichtung, eine Pultrusionsanlage und ein Verfahren zur kostengünstigen Herstellung von faserverstärkten Profilen mit optimierter Qualität zu schaffen.

Diese Aufgabe wird erfindungsgemäß mit den Merkmalen der unabhängigen Ansprüche gelöst. Weitere Ausführungsformen sind in den auf diese rückbezogenen Unteransprüchen angegeben.

Erfindungsgemäß ist eine Verformungs-Vorrichtung oder ein Formwerkzeug oder eine Pultrusions-Vorrichtung zur Verformung eines ebenen, d.h. aufwickelbaren oder bandförmigen Halbzeugs in ein profiliertes Faserverbundwerkstoff(FVW)-Halbzeug vorgesehen, wobei die Verformungs-Vorrichtung aufweist:
▪ ein unteres Werkzeugteil mit einer ersten Verformungsoberfläche und ein oberes Werkzeugteil mit einer der ersten Verformungsoberfläche zugewandten zweiten Verformungsoberfläche, die einen Pultrusionskanal oder Kanal zum Hindurchbewegen eines Halbzeugs in einer Vorschubrichtung bilden, wobei sich die Konturen der quer zur Vorschubrichtung des Halbzeugs verlaufenden Querschnitte der Verformungsoberflächen von einer im Eingangsbereich der Verformungs-Vorrichtung gelegenen Kontur kontinuierlich in eine im Ausgangsbereich der Verformungs-Vorrichtung gelegenen Kontur ändern, so dass das durch die Verformungs-Vorrichtung hindurch bewegte Halbzeug von einem ersten Profilquerschnitt in einen Soll-Profilquerschnitt im Ausgangsbereich übergeführt werden kann,
▪ eine an dem in Vorschubrichtung gesehen hinter dem Eingangsbereich gelegenen Heizvorrichtung.

Dabei weist die Verformungs-Vorrichtung eine Steuerungs- und Regeleinrichtung auf, die ein Ansteuerungsvorrichtung zur Einstellung der Heizvorrichtung aufweist und mit der im Einzugsbereich angeordneten Heizvorrichtung sowie mit einem im Einzugsbereich angeordneten Temperatursensor zum Empfang von Temperaturwerten funktional verbunden ist und in der ein Funktionsmodul mit einer Regelfunktion zur Regelung der Temperatur im Einzugsbereich implementiert ist, die auf der Basis der Temperaturwerte Ansteuerungssignale zur Übermittlung an die Heizvorrichtung ermittelt und an diese sendet, um die Temperatur im Einzugsbereich einzustellen.

Die Verformungsvorrichtung kann weiterhin eine Antriebsvorrichtung für die Herstellung einer Vorschubbewegung des Halbzeugs (2) in der Verformungs-Vorrichtung (1) aufweisen. Dabei kann vorgesehen sein, dass die Steuerungs- und Regeleinrichtung mit einer Antriebsvorrichtung für die Herstellung einer Vorschubbewegung des Halbzeugs (2) in der Verformungs-Vorrichtung (1) funktional verbunden ist und aufgrund der Temperaturwerte und einer Soll-Temperatur im Eingangsbereich Ansteuerungssignale für die Antriebsvorrichtung für die Herstellung einer Vorschubbewegung des Halbzeugs (2) in der Verformungs-Vorrichtung (1) ermittelt und an diese sendet.

Nach einem weitern Ausführungsbeispiel der Verformungs-Vorrichtung weist diese eine Verstellvorrichtung und einen mit der Verstellvorrichtung gekoppelten Stellantrieb auf, der zumindest eine der Werkzeughälften unter Ausübung von Druck mittels relativ zu der jeweils anderen Werkzeughälfte zum Öffnen und Schließen der Verformungs-Vorrichtung bewegen kann, so dass die Werkzeughälften als Presswerkzeug arbeiten können. Dabei kann insbesondere vorgesehen sein, dass die Verformungs-Vorrichtung einen Sensor zur Ermittlung von Signalen für die Kraft, mit der die Werkzeugteile geschlossen werden, aufweist, und dass das Funktionsmodul mit dem Sensor funktional verbunden ist und auf der Basis von Sollkräften für das Schließen der Werkzeugteile relativ zueinander Signale zur Ansteuerung des Stellantriebs der Verstellvorrichtung ermittelt und an diese sendet, mit denen die Sollkraft in vorbestimmten Grenzen eingehalten wird.

Insbesondere kann die Verstellvorrichtung und eine mit der Verstellvorrichtung gekoppelte Antriebsvorrichtung oder ein Stellantrieb oder Aktuator vorgesehen sein, die bzw. der zumindest eine der Werkzeughälften unter Ausübung von Druck mittels relativ zu der jeweils anderen zum Öffnen und Schließen der Verformungs-Vorrichtung bewegen kann, so dass die Werkzeughälften als Presswerkzeug arbeiten können. Die Steuerungs- und Regeleinrichtung, die mit der mit der Verstellvorrichtung gekoppelten Antriebsvorrichtung funktional verbunden ist, kann insbesondere eine Schnittstelle zu einer Antriebsvorrichtung für die Zuführung des Halbzeugs an die Verformungs-Vorrichtung und mit einem im Einzugsbereich angeordneten Temperatursensor aufweisen. In der Steuerungs- und Regeleinrichtung kann auch ein Funktionsmodul implementiert sein, mit dem eine Temperaturregelung im Einzugsbereich erfolgen kann und mit dem Signale zum Öffnen und Schließen der Verformungs-Vorrichtung in Abhängigkeit der Geschwindigkeit der Vorschubbewegung des Halbzeugs ermittelt und das ermittelte Öffnungs- und Schließkommandos an die Antriebsvorrichtung übermitteln kann.

Das Funktionsmodul kann eine Funktion zur Ermittlung von Signalen für die Kraft aufweisen, mit der die Werkzeugteile geschlossen werden, aufweist, und das ermittelte Werte für die Kraft an die Antriebsvorrichtung übermitteln kann.

Die im Einzugsbereich angeordnete Heizvorrichtung der Verformungs-Vorrichtung ist eine Vibrationseinrichtung mit der ein Bereich zumindest einer Verformungsoberfläche in Schwingung versetzt werden kann, um das Halbzeug mittels Reibungswärme zu erwärmen.

Der Temperatursensor kann ein Pyrometer oder ein Thermoelement sein.

Die Heizvorrichtung kann alternativ oder zusätzlich eine Induktionsvorrichtung aufweisen, mit der das Halbzeug erwärmt werden kann.

Die Verformungs-Vorrichtung kann weiterhin eine zweite Heizvorrichtung für einen Umformbereich sowie eine dritte Heizvorrichtung für eine am Ausgangsbereiche gelegenen Härtungsbereich aufweisen, wobei der Umformbereich in Vorschubrichtung gesehen vor dem Härtungsbereich gelegen ist, und dass am Umformbereich und am Härtungsbereich jeweils ein Temperatursensor angeordnet ist, der mit der Steuerungs- und Regeleinrichtung in Verbindung steht und das Funktionsmodul derselben eine Temperaturregelung und eine Ansteuerung an die zweite und dritte Heizvorrichtung aufweist.

Die Verstellvorrichtung kann derart beschaffen sein, dass die Lage der Werkzeugteile bei geschlossener Stellung der Werkzeugteile zueinander zur Veränderung der Form des Pultrusionskanals eingestellt werden kann.

Bei diesen Ausführungsformen kann alternativ oder zusätzlich zur Durchführung eines diskontinuierlichen oder quasi-kontinuierlichen Mobus vorgesehen sein, dass das Funktionsmodul der Steuerungs- und Regeleinrichtung eine Funktion aufweist, mit der zu vorbestimmten oder zu von der Steuerungs- und Regeleinrichtung bestimmten Zeitpunkten die Werkzeugteile auseinander und wieder zusammen gefahren werden, wobei im auseinander gefahrenen Zustand der Werkzeugteile durch Ansteuerung der Antriebsvorrichtung die Bewegung des Halbzeugs erfolgt und im auseinander gefahrenen Zustand der Werkzeugteile durch Ansteuerung der Antriebsvorrichtung die Bewegung des Halbzeugs angehalten wird.

Auch kann die Verformungs-Vorrichtung Führungsbahnen aufweisen, mit denen seitliche Randabschnitte des Halbzeugs zumindest im Bereich des Werkzeugs geführt werden können. Dabei können die Führungsbahnen außerhalb des Werkzeugs angeordnet sein.

Weiterhin ist erfindungsgemäß eine Anlage zur Herstellung eines profilierten Faserverbundwerkstoff(FVW)-Halbzeugs aus einem Halbzeug aus Trockenfaser- oder Prepregmaterial vorgesehen, aufweisend eine Verformungs-Vorrichtung nach der Erfindung und eine Antriebsvorrichtung zum Zuführen des Halbzeugs in die Verformungs-Vorrichtung.

Nach der Erfindung ist auch ein Verfahren zur Herstellung eines profilierten Faserverbundwerkstoff(FVW)-Halbzeugs aus einem Halbzeug aus Trockenfaser- oder Prepregmaterial, das in seiner Längsrichtung durch eine Verformungs-Vorrichtung bewegt wird, vorgesehen. Das Verfahren weist die Schritte auf:
- Hindurchbewegen des Halbzeugs auf einer Trägerfolie in Längsrichtung einer Verformungs-Vorrichtung zwischen den einander zugewandten Verformungskonturen von Werkzeugteilen, deren Verformungskonturen der Querschnitte der Werkzeugteile sich von einer Querschnittskontur im Eingangsbereich kontinuierlich zu einer Verformungskontur im Ausgangsbereich ändern, und
- In-Schwingung-Versetzen eines Auflageteils im Einzugsbereich der Verformungs-Vorrichtung derart, dass aufgrund der zwischen dem Auflageteil und dem Halbzeug entstehende Reibungswärme das Halbzeug in einen verformbaren Zustand versetzt wird, wobei die Geschwindigkeit der Bewegung des Halbzeugs in Abhängigkeit einer Temperatur des Halbzeugs geregelt wird.

Bei dem erfindungsgemäßen Verfahren kann insbesondere vorgesehen sein, dass die Werkzeugteile während der kontinuierlichen Bewegung des Halbzeugs in Zeitabständen geöffnet und wieder auf ihren Verformungsabstand gebracht werden, wobei das Öffnen und Schließen der Verformungs-Vorrichtung in Abhängigkeit der Geschwindigkeit der Vorschubbewegung aufgrund von öffnungs- und Schließkommandos durch eine Steuerungs- und Regelvorrichtung erfolgt.

Erfindungsgemäß kann auch vorgesehen sein, dass die Verformungs-Vorrichtung in Abhängigkeit zumindest einer gemessenen Temperatur aufgrund von Öffnungs- und Schließkommandos durch eine Steuerungs- und Regelvorrichtung geöffnet und mit einer vorgegebenen Druckkraft geschlossen wird, wobei die Bewegung des Halbzeugs während des geschlossenen Zustands der Verformungs-Vorrichtung angehalten wird. Dabei kann vorgesehen sein, dass während des Anhaltens der Bewegung des Halbzeugs die Temperaturen in einer Einzugszone, einer Hauptumformzone und einer Härtungszone Zeit- und/oder Temperatur-abhängig geregelt wird.

Generell kann bei dem Verfahren nach der Erfindung vorgesehen sein, dass das Halbzeug beim Hindurchbewegen durch die Verformungs-Vorrichtung von einem Ausgangszustand in ein Omega-Profil (Hutprofil) umgeformt wird.

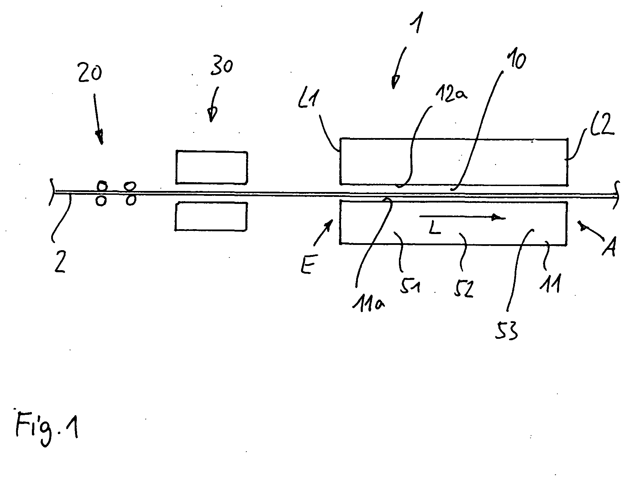

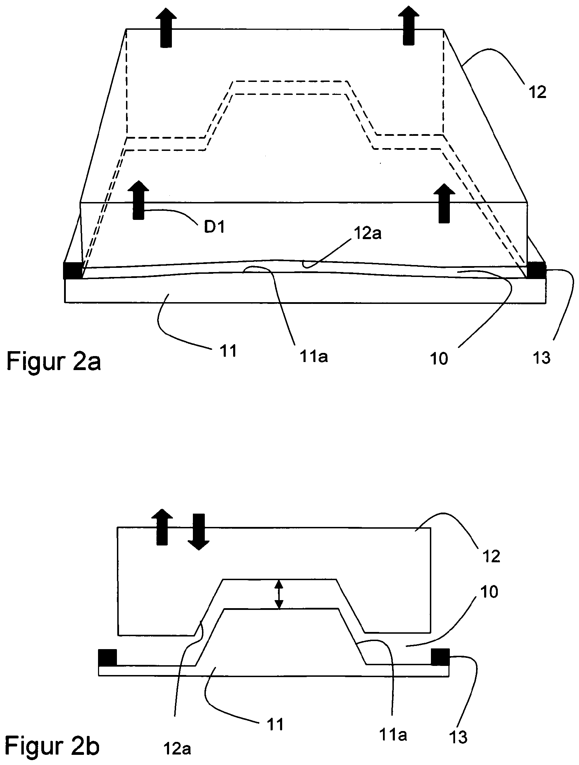

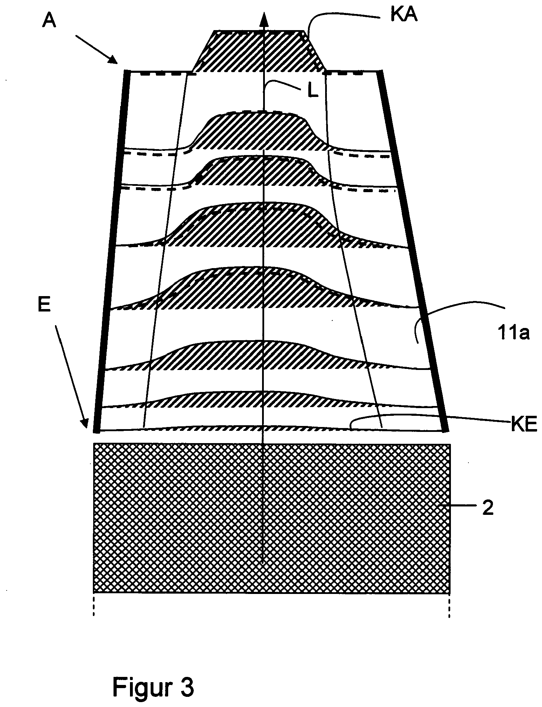

Im Folgenden werden Ausführungsbeispiele an Hand der beiliegenden Figuren erläutert, die zeigen:
▪ Figur 1 eine schematische Darstellung einer Anlage mit einer Verformungs-Vorrichtung für die Durchführung des erfindungsgemäßen Verfahrens,
▪ Figur 2a eine schematische perspektivische Dartellung einer Ausführungsform der Verformungs-Vorrichtung oder des Pultrusionswerkzeugs mit einem unteren und einem oberen Werkzeugteil in Längsrichtung gesehen,
▪ Figur 2b eine schematische Querschnitts-Darstellung der Ausführungsform des in der Figur 2a dargestellten Verformungs-Vorrichtung schräg von oben gesehen, und
▪ Figur 3 eine perspektivische Darstellung des unteren Werkzeugteils mit den Verformungskonturen desselben schräg von oben gesehen.

Erfindungsgemäß wird ein Halbzeug 2 in einer Vorschubrichtung V durch ein konturgebendes Werkzeug oder eine Verformungs-Vorrichtung 10 mit einem Eingangsbereich 3 an einer Eingangsseite L1 und einem in der Längsrichtung L zu diesem entfernt gelegenen Ausgangsbereich 4 an einer Ausgangsseite L2 geführt, so dass dementsprechend die Vorschubrichtung V in Längsrichtung L der Verformungs-Vorrichtung 1 liegt.

Die Verformungs-Vorrichtung oder die Pultrusions-Vorrichtung 1 ist Teil einer Pultrusionsanlage A und ist aus einem unteren Werkzeugteil 11 mit einer ersten Verformungsoberfläche 11a und einem oberen Werkzeugteil 12 mit einer der ersten Verformungsoberfläche 11a zugewandten zweiten Verformungsoberfläche 12a gebildet. Die Konturen der quer zur Vorschubrichtung V verlaufenden Querschnitte der Verformungsoberflächen 11a, 12a ändern sich von einer im Eingangsbereich E gelegenen Kontur KE kontinuierlich in eine im Ausgangsbereich A gelegenen Kontur KA. Die Konturen KE und KA der Verformungsoberflächen 11a, 12a sowie der kontinuierliche Übergang zwischen diesen und somit die Gestalt des von diesen bei geschlossener Verformungs-Vorrichtung 1 freigegebenen Formkerns oder Pultrusionskanals 10 ist derart beschaffen, dass das Halbzeug 2 von einem ersten oder anfänglichen Profilquerschnitt, mit dem das Halbzeug 2 der Verformungs-Vorrichtung 1 zugeführt wird, in einen Soll-Profilquerschnitt übergeführt wird, mit dem das Halbzeug 2 der weiteren Bearbeitung zugeführt wird.

Die Werkzeughälften 11, 12 sind zueinander unter Ausübung von Druck mittels einer Verstellvorrichtung und einer mit dieser gekoppelten Antriebsvorrichtung zueinander bewegbar, so dass die Werkzeughälften als Presswerkzeug arbeiten können. Die erfindungsgemäße Verformungs-Vorrichtung 1 ist daher als Press-Umform-Werkzeug gestaltet.

Vorzugsweise ist das obere Werkzeugteil gegenüber dem unteren Werkzeugteil translatorisch bewegbar. Auch kann vorgesehen sein, dass das obere Werkzeugteil räumlich gegenüber dem unteren Werkzeugteil bewegbar ist. Dadurch kann das Spaltmaß eingestellt werden. Weiterhin können dadurch, insbesondere während des Pultrusionsvorgangs die Werkzeugteile zueinander bewegt, d.h. geöffnet und geschlossen werden, um den Transportvorgang zu unterstützen. Weiterhin kann vorgesehen sein, dass das Schließen des Werkzeug unter Anwendung eine vorbestimmten Kraft erfolgt, um ein Pressen der durch die Verformungs-Vorrichtung geführten Halbzeugs 2 in vorbestimmter Weise vorzunehmen.

Weiterhin können auf den einander zugewandten Seiten der Werkzeugteile 11a, 12a diese Aufnahmevorrichtungen zur Aufnahme von Konturflächen-Einsatzteilen aufweisen, so dass in die Verformungs-Vorrichtung 1 austauschbare Teile mit verschiedenen formgebenden Konturflächen oder -verläufe eingesetzt werden können und somit verschiedenartige Profile herstellbar sind.

Als Halbzeug 2 ist ein ebenes, d.h. flaches oder bandförmiges oder mattenförmiges Vorgelege aus Trockenfaser- oder Prepreg-Material vorgesehen. Als Fasern kommen dabei zugfeste und steife Fasern aus z. B. Amid, Glas, Kohlenstoff, Silicium oder Graphit in Betracht. Bei der Verwendung von Prepreg-Halbzeugen, also mit einem Matrix-Material vorimprägnierten Halbzeugen, sind die textilen Fasern oder Gelege bereits mit Matrix-Material versehen. Bei der Verwendung von Trockenfaser-Material wird dieses vor der Einführung desselben in die Verformungs-Vorrichtung 1 mit Matrix-Material versehen. Dabei kann z.B. vorgesehen sein, dass das Trockenfaser-Material durch ein Tränkbad mit Matrix-Material geführt oder mit Matrix-Material z.B. durch Benetzen oder Besprühen versehen wird. Nach dem Durchlaufen des Halbzeugs durch die Verformungs-Vorrichtung 1 wird das Halbzeug 2 mit dem Matrix-Material durch Einwirkung von geeigneten Temperaturen und/oder geeigneten Drücken gehärtet. Die in das Matrix-Material eingebetteten Fasern bewirken eine Verstärkung der herzustellenden Verbundwerkstoffe. Als Matrix-Material können duroplastische Materialien wie ungesättigte Polyesterharze (UP), Epoxidharze (EP) oder Vinylester (VE) oder thermoplastische Materialien wie Polypropylen (PP), Polyamid (PA), Polyetheretherketon (PEEK) verwendet werden.

Die Pultrusionsanlage A weist eine Antriebsvorrichtung 20 zur Zuführung oder zum Vorschub des Halbzeug 2s in die oder der Verformungs-Vorrichtung 1 auf. Dieser kann einen Rollenantrieb umfassen, bei dem gegensinnig drehende Rollen das Halbzeug 2 vorwärts, d.h. in Richtung auf die Verformungs-Vorrichtung 1 schieben, wobei der Anpressdruck der Rollen sowie die Beschaffenheit der Rollen derart vorgesehen ist, dass ein Durchrutschen des Halbzeugs bei der Zuführung desselben verhindert wird. Dabei können einseitig und/oder beidseitig von einem Motor angetriebene Antriebsrollen, d.h. Rollen, die auf beiden Seiten des anzutreibenden Halbzeugs gelegen sind, vorgesehen sein. Eine oder mehrere der Rollen können federgelagert sein, um einen vorgegebenen Anpressdruck dauerhaft auf das Halbzeug 2 auszuüben. Die Antriebsvorrichtung kann geschwindigkeitsgesteuert und/oder leistungsgesteuert sein. Weiterhin können die Rollen beheizbar und/oder kühlbar sein.

Auch kann die Antriebsvorrichtung 20 als Greifmechanismus ausgeführt sein. Diese kann z.B. mit zwei Greifern ausgeführt sein, wobei jeweils ein Greifer mit dem Halbzeug 2 zu dessen Fortbewegung im Eingriff ist, während der jeweils andere Greifer zurück gesetzt wird um das Halbzeug 2 an einer entgegen der Fortbewegungsrichtung gelegenen Stelle wieder zu ergreifen. Dabei können auch mehr als zwei Greifer verwendet werden. Ein solcher Greifmechanismus kann auch in Kombination mit dem vorgenannten Rollenantrieb verwendet werden.

Alternativ oder zusätzlich kann als Antriebsmechanismus auch ein Bandmechanismus mit zwei Laufbändern verwendet werden, die das Halbzeug 2 in ihrer Bewegung mitnehmen und auf diese Weise das Halbzeug 2 fortbewegen. Dabei können beide Bänder oder nur ein Band angetrieben sein. Die Bänder können federgelagert sein, wodurch ein vorbestimmter Anpressdruck auf das Halbzeug 2 ausgeübt wird. Auch können die Bänder mit einer Heiz- oder Kühlvorrichtung gekoppelt sein, um zumindest eines der Bänder zu heizen oder zu kühlen und bei dem Halbzeug 2 insbesondere während des Fortbewegens eine Temperaturänderung zu bewirken.

Mit der Antriebsvorrichtung kann auch eine Vorschubkontroll-Vorrichtung gekoppelt sein, um die Geschwindigkeit der Halbzeug-Bewegung zu kontrollieren, zu steuern oder zu bewegen.

Optional kann die Pultrusionsanlage A eine Vorrichtung 30 zur Aufbringung von Matrix-Material auf das Halbzeug 2 aufweisen. Die Vorrichtung 30 kann dabei ein Tränkbad, durch das das Halbzeug 2 hindurchgeführt wird, eine Sprühvorrichtung oder eine Benetzungsvorrichtung sein. Bei einer Sprühvorrichtung oder eine Benetzungsvorrichtung werden insbesondere die Fasern, aber alternativ oder zusätzlich auch die Gewebebahnen mit einem flüssigen Kunststoff oder dem Matrix-Material benetzt. Dies kann unabhängig, beispielsweise vor dem nachfolgend beschriebenen Werkzeug erfolgen. Alternativ oder zusätzlich kann dies jedoch auch innerhalb dieses Werkzeugs erfolgen. Bei dem Kunststoff kann es sich beispielsweise um Epoxidharze, Polyester, Vinylester, Acryl oder dergleichen handeln.

Weiterhin ist das Pultrusionswerkzeug mit drei verschiedenen Heizzonen realisiert. Dazu ist das obere Werkzeugteil 12 mit der zweiten Werkzeugkonturfläche in drei, in der Längsrichtung L hintereinander angeordneten Werkzeugteil-Abschnitten 51, 52, 53 gebildet.

Der erste 51, zweite 52 und dritte 53 Werkzeugteil-Abschnitt weist jeweils eine erste, zweite bzw. dritte Heizvorrichtung auf, wobei die erste Heizvorrichtung am oder in Längsrichtung gesehen hinter dem Eingangsbereich E und die dritte Heizvorrichtung am oder vor dem Eingangsbereich E gelegen ist. Die zweite Heizvorrichtung oder der zweite Werkzeugteil-Abschnitt 52 ist in Längsrichtung L gesehen zwischen der ersten und der dritten Heizvorrichtung gelegen.

Die erste Heizvorrichtung ist in dem am Eingangsbereich E gelegenen Einzugsbereich 51 angeordnet. Diese ist so gestaltet, dass mit dieser das Halbzeug in einen verformbaren plastischen Zustand gebracht werden kann. Diese ist als Vibrationsvorrichtung ausgeführt. Hierzu ist in dem Eingangsbereich E ein in Schwingung versetzbares Auflageteil angeordnet. Das in Schwingung versetzbare Auflageteil kann an der ersten Verformungsoberfläche 11a und/oder an der zweiten Verformungsoberfläche 12a angeordnet sein. Das in Schwingung versetzbare Auflageteil kann auch ein in Längsrichtung L verlaufender Abschnitt des unteren Werkzeugteils 11 sein und dabei ein sich in Längrichtung L erstreckender Abschnitt der ersten Konturoberfläche 11a sein. Alternativ oder zusätzlich kann das in Schwingung versetzbare Auflageteil ein in Längsrichtung L verlaufender Abschnitt des oberen Werkzeugteils 12 sein, der einen sich in Längrichtung L erstreckenden Abschnitt der ersten Konturoberfläche 11a aufweist. Durch die Relativbewegung des Oberflächenabschnitts mit der auf diesem liegenden Oberflächenabschnitt des Halbzeugs und/oder durch die Relativbewegung der gegenüberliegenden Oberfläche des jeweiligen Werkzeugteils wird Reibungswärme im Halbzeug erzeugt. Erfindungsgemäß ist die Vibration derart vorgesehen, dass das mit Matrix-Material versehene Halbzeug ausreichend erwärmt wird, dass dieses in einen verformbaren Zustand gebracht wird.

In einer alternativen Ausführungsform kann eine Vibrationsplatte auf die erste Verformungsoberfläche 11a und/oder in die zweite Verformungsoberfläche 12a gegenüber dieser bewegbar aufgesetzt sein.

Die zumindest eine Vibrationsplatte wird motorisch angetrieben und ist derart gestaltet, dass diese das Halbzeug 2 über die Schmelztemperatur des Matrix-Materials erhitzen kann.

Der Vorteil dieses Verfahrens besteht darin, dass ein kontinuierlicher Temperaturverlauf des Halbzeugs 2 ohne das Auftreten von Temperaturschocks gewährleistet ist.

Alternativ oder zusätzlich kann die erste Heizvorrichtung eine im unteren und/oder oberen Werkzeugteil angeordnete Induktionsspule sein.

Erfindungsgemäß ist die zweite Zone die Hauptumformzone. Dementsprechend ist die zweite Heizvorrichtung derart realisiert, dass die jeweilige Umformtemperatur im Halbzeug erzeugt werden kann. Die zweite Heizvorrichtung kann im unteren Werkzeugteil und/oder im oberen Werkzeugteil angeordnet und beispielsweise als eine Heißgas-Vorrichtung, einen Infrarotstrahler, einen Laser, Mikrowellen- oder Radiowellen-Heizer, eine Ultraschall-Vorrichtung und/oder eine Induktionsspule aufweisen.

In der Härtezone 53 ist ein Autoklav integriert, um in der Härtezone das Halbzeug härten zu können.

Vorzugweise ist in jeder Zone ein Temperatursensor mit einer Temperaturüberwachungs-Einrichtung vorgesehen. Durch die Kontrolle der Prozesstemperaturen kann insbesondere die Qualität des herzustellenden Halbzeugs bzw. Bauteils optimiert werden. Insbesondere ist dadurch die Durchführung von reproduzierbaren Testläufen mittels einer gezielten Temperaturüberwachung möglich.

Als Temperatursensor kann ein Pyrometer (Infrarot-Thermometer) verwendet werden, das die vom Halbzeug 2 abgestrahlte Infrarot-Energie misst und auf diese Weise die Temperatur Halbzeug 2 ermitteln kann.

Die Verwendung eines solchen Temperatursensors hat den Vorteil, dass die Temperaturmessungen an der geschmolzenen Matrix kontaktlos erfolgen, so dass ein Matrixhaften am Temperatursensor vermieden wird.

Alternativ oder zusätzlich kann als Temperatursensor ein Thermoelement verwendet werden, der einen Messkörper mit einem temperatursensitivem Widerstandsverhalten aufweist, wobei die Temperatur indirekt über eine Widerstandsmessung ermittelt wird. Bei der Ermittlung der Temperatur des Halbzeugs 2 wird in einem Korrekturmodul mit entsprechenden implementierten Funktionen eine Abgleichung von Temperaturunterschieden zwischen der gemessenen Temperatur des Thermoelements und der Temperatur der Halbzeugmatrix vorgenommen. Die Abgleichung dieser Temperaturunterschiede führt zu einer zeitlichen Verzögerung (Tiefpasscharakter), welche in dem Korrekturmodul ebenfalls berücksichtigt wird. Allerdings muss bei diesem Temperaturabgleich der direkte Kontakt mit dem Halbzeug in Kauf genommen werden.

Der Verformungs-Vorrichtung 1 ist eine Steuerungsvorrichtung zugeordnet, mit der Soll-Temperaturen vorgegeben werden kann und die eine Regelungsvorrichtung und eine entsprechende Ansteuerung der Heizvorrichtungen aufweist, mit der die Soll-Temperaturen der Heizvorrichtungen vorgegeben und geregelt werden können.

Die Verformungs-Vorrichtung 1 weist ferner eine Verstellvorrichtung mit einer entsprechenden Antriebsvorrichtung auf, mit der die Werkzeugteile 11a, 12a zueinander geöffnet (Pfeil D1) und geschlossen werden können. Die Steuerungsvorrichtung kann funktional mit der Antriebsvorrichtung gekoppelt sein, so dass aufgrund bestimmter Vorgaben die Werkzeugteile zueinander geöffnet oder geschlossen werden können. Das Öffnen und Schließen der Werkzeugteile 11a, 12a kann in vorgegebenen, d.h. eingestellten Zeitabständen erfolgen, oder nach anderen Kriterien vorgeben werden. Z.B. kann eine Funktion in der Steuerungsvorrichtung implementiert sein, mit der das Öffnen und Schließen bei Erreichen einer vorgegebenen Temperatur in einer oder mehreren Heizzonen 51, 52, 53 erfolgt.

Nach dem erfindungsgemäßen Verfahren wird das Halbzeug 2 mittels der Antriebsvorrichtung 20 als flaches Vorgelege, das ein Trockenfaser- oder Prepreg-Material ist, dem Pultrusionswerkzeug 10 bandförmig zugeführt. Dabei kann das Halbzeug 2 in einem Lagenaufbau oder in einzelnen Lagen dem Pultrusionswerkzeug 10 zugeführt werden. Das Material wird auf einer Trägerfolie in das Pultrusionswerkzeug eingezogen.

Der Halbzeugabschnitt, der in dem Einzugsbereich gelegen ist, wird mittels der ersten Heizvorrichtung auf eine Temperatur erwärmt, bei der eine Vorverformung des Halbzeugs 2 in dem Maße erfolgen kann, in dem sich, bezüglich einer Längsposition auf dem sich bewegenden Halbzeug, die Kontur der Werkzeugteile 11, 12 ändert. Die Erwärmung des Halbzeugs 2 mittels der ersten Heizvorrichtung verbessert das Umformverhalten des Halbzeugs 2.

Der betrachtete Abschnitt oder die betrachtete Stelle des Halbzeugs 2 wird weiter durch das Pultrusionswerkzeug gezogen, so dass aus dem Halbzeug mit vor dem Eingangsbereich E flachen Profilquerschnitt kontinuierlich in ein Halbzeug mit einem Soll-Profil geformt wird.

Die Verformungs-Vorrichtung 1 kann zum einen im kontinuierlichen Modus arbeiten, indem das Halbzeug 2 kontinuierlich eingezogen und umgeformt wird. Die Werkzeugteile 11a, 12a können dabei statisch zueinander gelegen sein. Alternativ kann in dem kontinuierlichen Modus vorgesehen sein, dass die die Werkzeugteile 11a, 12a soweit öffnen, dass der Transport- und Umformvorgang erleichtert wird. In diesem Modus bleiben die zweite und die dritte Heizvorrichtung auf einer Umformtemperatur. Nach dem Herausführen des verformten Halbzeugs 2 wird dieses mittels eines geeigneten Verfahrens in seiner Form gehalten und weiterverarbeitet, z.B. mit einem Bauteilträger oder einem weiteren Bauteil zusammen gesetzt.

Das Öffnen und Schließen der Werkzeugteile zueinander kann in regelmäßigen Zeitabständen erfolgen, die an einer Steuerungsvorrichtung voreingestellt werden können oder die mittels einer Regelung mit den genannten Regelgrößen erfolgen kann.

Das Halbzeug 2 wird in der Verformungs-Vorrichtung 1 mittels einer Führungseinrichtung 13 geführt. Z.B. werden seitliche Randabschnitte des Halbzeugs mittels Führungsbahnen, die im Bereich des Werkzeugs oder außerhalb des Werkzeugs angeordnet sind, geführt.

Weiterhin kann die erfindungsgemäße Verformungs-Vorrichtung 1 in einem diskontinuierlichen oder in einem quasi-kontinuierlichen Modus arbeiten. Unter "quasikontinuierlicher Prozess" soll in diesem Zusammenhang ein Herstellungsverfahren verstanden werden, bei dem zwar die Vorschubbewegung des Halbzeugs in Zeitabschnitten gestoppt wird, insbesondere um einen Press-Vorgang auszuführen, und bei dem das bearbeitete Halbzeug bis zum Scheidvorgang der Anlage nicht entnommen wird, so dass das Verfahren in dieser Hinsicht auch als "kontinuierlich" angesehen werden kann. Dabei wird das obere Werkzeugteil 12a in regelmäßigen Zeitabständen oder nach vorgegebenen Sollwerten geregelt angehoben und das Halbzeug 2 schrittweise in der Verformungs-Vorrichtung 1 mittels der Führungseinrichtung 13 geführt. Das Schließen der Werkzeugteile 11a, 12a erfolgt unter Aufbringung einer vorbestimmten Kraft, so dass das Halbzeug beim Schließen der Werkzeugteile 11a, 12a in vorbestimmtem Maße gepresst wird. Dabei ist der Einzugsbereich auf eine Vorverformungstemperatur gebracht, mit der das Halbzeug auf eine Umformtemperatur gebracht, d.h. plastifiziert wird. Dabei ist weiterhin die Härtezone 53 auf eine Härtungstemperatur gebracht, so dass das Halbzeug in dieser Zone langsam aushärtet. Die Aushärtung erfolgt also im in Längrichtung L gesehen hinteren Bereich der Verformungs-Vorrichtung.

## Patentansprüche

1. Verformungs-Vorrichtung (1) zur Umformung eines ebenen Halbzeugs (2) in ein profiliertes Faserverbundwerkstoff(FVW)-Halbzeug, aufweisend:
• ein unteres Werkzeugteil (11) mit einer ersten Verformungsoberfläche (11 a) und ein oberes Werkzeugteil (12) mit einer der ersten Verformungsoberfläche (11a) zugewandten zweiten Verformungsoberfläche (12a), die einen Pultrusionskanal (10) zum Hindurchbewegen eines Halbzeugs in einer Vorschubrichtung (V) bilden, wobei sich die Konturen der quer zur Vorschubrichtung (V) des Halbzeugs verlaufenden Querschnitte der Verformungsoberflächen (11a, 12a) von einer im Eingangsbereich (E) der Verformungs-Vorrichtung (1) gelegenen Kontur (KE) kontinuierlich in eine im Ausgangsbereich (A) der Verformungs-Vorrichtung (1) gelegenen Kontur (KA) ändern, so dass das durch die Verformungs-Vorrichtung (1) hindurch bewegte Halbzeug von einem ersten Profilquerschnitt in einen Soll- Profilquerschnitt im Ausgangsbereich (A) übergeführt werden kann,
• eine in dem in Vorschubrichtung gesehen hinter dem Eingangsbereich (E) gelegenen Einzugsbereich (51) angeordnete Heizvorrichtung,
**dadurch gekennzeichnet,**
**dass** die Heizvorrichtung im Eingangsbereich eine Vibrationseinrichtung mit einem in Schwingung versetzbaren Auflageteil ist, mit der ein Bereich zumindest einer Verformungsoberfläche (11a, 12a) in Schwingung versetzt werden kann, um das Halbzeug mittels Reibungswärme zu erwärmen, und
**dass** die Verformungs-Vorrichtung (1) aufweist:
• eine Steuerungs- und Regeleinrichtung, die ein Ansteuerungsvorrichtung zur Einstellung der Heizvorrichtung aufweist und mit der im Einzugsbereich (51) angeordneten Heizvorrichtung sowie mit einem im Einzugsbereich (51) angeordneten Temperatursensor zum Empfang von Temperaturwerten funktional verbunden ist und in der ein Funktionsmodul mit einer Regelfunktion zur Regelung der Temperatur im Einzugsbereich (E) implementiert ist, die auf der Basis der Temperaturwerte und einer Soll-Temperatur im Eingangsbereich Ansteuerungssignale zur Übermittlung an die Heizvorrichtung ermittelt und an diese sendet, um die Temperatur im Einzugsbereich (5) einzustellen.

2. Verformungs-Vorrichtung (1) nach dem Anspruch 1, **dadurch gekennzeichnet, dass** diese eine Antriebsvorrichtung für die Herstellung einer Vorschubbewegung des Halbzeugs (2) in der Verformungs-Vorrichtung (1) aufweist und dass die Steuerungs- und Regeleinrichtung mit einer Antriebsvorrichtung für die Herstellung einer Vorschubbewegung des Halbzeugs (2) in der Verformungs-Vorrichtung (1) funktional verbunden ist und aufgrund der Temperaturwerte und einer Soll-Temperatur im Eingangsbereich Ansteuerungssignale für die Antriebsvorrichtung für die Herstellung einer Vorschubbewegung des Halbzeugs (2) in der Verformungs-Vorrichtung (1) ermittelt und an diese sendet.

3. Verformungs-Vorrichtung (1) nach dem Anspruch 1 oder 2, **dadurch gekennzeichnet, dass** die Verformungs-Vorrichtung (1) eine Verstellvorrichtung und einen mit der Verstellvorrichtung gekoppelten Stellantrieb aufweist, der zumindest eine der Werkzeughälften (11, 12) unter Ausübung von Druck mittels relativ zu der jeweils anderen Werkzeughälfte zum Öffnen und Schließen der Verformungs-Vorrichtung (1) bewegen kann, so dass die Werkzeughälften als Presswerkzeug arbeiten können.

4. Verformungs-Vorrichtung (1) nach dem Anspruch 3, **dadurch gekennzeichnet, dass** die Verformungs-Vorrichtung (1) einen Sensor zur Ermittlung von Signalen für die Kraft, mit der die Werkzeugteile geschlossen werden, aufweist, und dass das Funktionsmodul mit dem Sensor funktional verbunden ist und auf der Basis von Sollkräften für das Schließen der Werkzeugteile relativ zueinander Signale zur Ansteuerung des Stellantriebs der Verstellvorrichtung ermittelt und an diese sendet, mit denen die Sollkraft in vorbestimmten Grenzen eingehalten wird.

5. Verformungs-Vorrichtung (1) nach einem der voranstehenden Ansprüche, **dadurch gekennzeichnet, dass** der Temperatursensor ein Pyrometer oder ein Thermoelement ist.

6. Verformungs-Vorrichtung (1) nach einem der voranstehenden Ansprüche, **dadurch gekennzeichnet, dass** die Heizvorrichtung eine Induktionsvorrichtung aufweist, mit der das Halbzeug erwärmt werden kann.

7. Verformungs-Vorrichtung (1) nach einem der voranstehenden Ansprüche, **dadurch gekennzeichnet, dass** die Verformungs-Vorrichtung (1) eine zweite Heizvorrichtung für einen Umformbereich (52) sowie eine dritte Heizvorrichtung für einen am Ausgangsbereich (A) gelegenen Härtungsbereich (53) aufweist, wobei der Umformbereich (52) in Vorschubrichtung (V) gesehen vor dem Härtungsbereich (53) gelegen ist, und dass am Umformbereich und am Härtungsbereich (53) jeweils ein Temperatursensor angeordnet ist, der mit der Steuerungs- und Regeleinrichtung in Verbindung steht und das Funktionsmodul derselben eine Temperaturregelung und eine Ansteuerung an die zweite und dritte Heizvorrichtung aufweist.

8. Verformungs-Vorrichtung (1) nach einem der voranstehenden Ansprüche, **dadurch gekennzeichnet, dass** die Verstellvorrichtung derart beschaffen ist, dass die Lage der Werkzeugteile (11a, 12b) bei geschlossener Stellung der Werkzeugteile (11a, 11b) zueinander zur Veränderung der Form des Pultrusionskanals (10) eingestellt werden kann.

9. Verformungs-Vorrichtung (1) nach einem der voranstehenden Ansprüche, **dadurch gekennzeichnet, dass** das Funktionsmodul der Steuerungs- und Regeleinrichtung eine Funktion aufweist, mit der zu vorbestimmten oder zu von der Steuerungs- und Regeleinrichtung bestimmten Zeitpunkten die Werkzeugteile (11a, 12a) auseinander und wieder zusammen gefahren werden, wobei im auseinander gefahrenen Zustand der Werkzeugteile (11a, 12a) durch Ansteuerung der Antriebsvorrichtung die Bewegung des Halbzeugs mit einer vorbestimmten Geschwindigkeit erfolgt und im zusammen gefahrenen Zustand der Werkzeugteile (11a, 12a) durch Ansteuerung der Antriebsvorrichtung die Bewegung des Halbzeugs (2) angehalten wird.

10. Vorrichtung nach einem der voranstehenden Ansprüche, **dadurch gekennzeichnet, dass** seitliche Randabschnitte des Halbzeugs (2) zumindest im Bereich des Werkzeugs mittels Führungsbahnen geführt sind.

11. Vorrichtung nach dem Patentanspruch 10, **dadurch gekennzeichnet, dass** die Führungsbahnen außerhalb des Werkzeugs angeordnet sind.

12. Anlage (A) zur Herstellung eines profilierten Faserverbundwerkstoff(FVW)- Halbzeugs aus einem Halbzeug (2) aus Trockenfaser- oder Prepregmaterial, aufweisend eine Verformungs-Vorrichtung (1) nach einem der voranstehenden Ansprüche und eine Antriebsvorrichtung zum Zuführen des Halbzeugs (2) in die Verformungs-Vorrichtung (1).

13. Verfahren zur Herstellung eines profilierten Faserverbundwerkstoff(FVW)- Halbzeugs aus einem Halbzeug (2) aus Trockenfaser- oder Prepregmaterial, das in seiner Längsrichtung (L) durch eine Verformungs-Vorrichtung (1) bewegt wird,
• mit einem Hindurchbewegen des Halbzeugs (2) in Längsrichtung (L) einer Verformungs-Vorrichtung (1) zwischen den einander zugewandten Verformungskonturen von Werkzeugteilen (11a, 12a), deren Verformungskonturen der Querschnitte der Werkzeugteile (11a, 12a) sich von einer Querschnittskontur im Eingangsbereich kontinuierlich zu einer Verformungskontur im Ausgangsbereich ändern, und
das Verfahren ist **dadurch gekennzeichnet, dass**
das Halbzeug auf einer Trägerfolie bewegt wird, mit einem In-Schwingung-Versetzen eines Auflageteils im Einzugsbereich der Verformungs-Vorrichtung (2) derart, dass aufgrund der zwischen dem Auflageteil und dem Halbzeug entstehende Reibungswärme das Halbzeug in einen verformbaren Zustand versetzt wird, wobei die Geschwindigkeit der Bewegung des Halbzeugs (2) in Abhängigkeit einer Temperatur des Halbzeugs (2) geregelt wird.

14. Verfahren nach dem Patentanspruch 13, **dadurch gekennzeichnet, dass** die Werkzeugteile (11a, 12a) während der kontinuierlichen Bewegung des Halbzeugs in Zeitabständen geöffnet und wieder auf ihren Verformungsabstand gebracht werden, wobei das Öffnen und Schließen der Verformungs-Vorrichtung (1) in Abhängigkeit der Geschwindigkeit der Vorschubbewegung (V) aufgrund von öffnungs- und Schließkommandos durch eine Steuerungs- und Regelvorrichtung erfolgt.

15. Verfahren nach dem Patentanspruch 13, **dadurch gekennzeichnet, dass** die Verformungs-Vorrichtung (1) in Abhängigkeit zumindest einer gemessenen Temperatur aufgrund von öffnungs- und Schließkommandos durch eine Steuerungs- und Regelvorrichtung geöffnet und mit einer vorgegebenen Druckkraft geschlossen wird, wobei die Bewegung des Halbzeugs während des geschlossenen Zustands der Verformungs-Vorrichtung (1) angehalten wird.

16. Verfahren nach dem Patentanspruch 15, **dadurch gekennzeichnet, dass** während des Anhaltens der Bewegung des Halbzeugs (2) die Temperaturen in einer Einzugszone (51), einer Hauptumformzone (52) und einer Härtungszone (53) Zeit- und/oder Temperatur-abhängig geregelt wird.

17. Verfahren nach einem der Patentansprüche 13 bis 16, **dadurch gekennzeichnet, dass** das Halbzeug (2) beim Hindurchbewegen durch die Verformungs-Vorrichtung (1) von einem Ausgangszustand in ein Omega-Profil (Hutprofil) umgeformt wird.

## Claims

1. Forming device (1) for forming a flat semi-finished product (2) into a profiled semi-finished fibre reinforced composite (FRC), comprising:
• a lower die part (11) having a first forming surface (11a) and an upper die part (12) having a second forming surface (12a) facing the first forming surface (11a), which form a pultrusion channel (10) for advancing a semi-finished product in a feed direction (V), wherein the contours of the cross-sections of the forming surfaces (11a, 12a) that extend transversely to the feed direction (V) of the semi-finished product change progressively from a contour (KE) located in the inlet region (E) of the forming device (1) to a contour (KA) located in the outlet region (A) of the forming device (1), so that the semi-finished product which has been moved through the forming device (1) can be converted from a first cross-section profile to a target cross section profile in the outlet region (A),
• a heating device arranged in the infeed region (51) located behind the inlet region (E) when viewed in the feed direction
**characterized in that**
the heating device in the inlet region is a vibrating element with a bearing part that can be caused to vibrate, by which an area of at least one forming surface (11a, 12a) can be caused to vibrate in order to heat the semi-finished product by means of frictional heat, and
that the forming device (1) comprises:
• a control and regulating device having an activation apparatus for adjusting the heating device and which is functionally connected to the heating device arranged in the infeed region (51) and to a temperature sensor which is arranged in the infeed region (51) for receiving temperature values, and in which a function module having a control function for controlling the temperature in the infeed region (E) is implemented, which calculates activation signals for transmission to the heating device on the basis of the temperature values and a setpoint temperature in the inlet region, and transmits them to the heating device to adjust the temperature in the infeed region (5).

2. Forming device (1) according to Claim 1, **characterized in that** it includes a drive device for producing a feed movement of the semi-finished product (2) in the forming device (1), and that the control and regulating device is functionally connected to a drive device for producing a feed movement of the semi-finished product (2) in the forming device (1) and calculates activation signals for the drive device for for producing a feed movement of the semi-finished product (2) in the forming device (1) on the basis of the temperature values and a setpoint temperature in the inlet region and transmits them to the device device.

3. Forming device (1) according to Claim 1 or 2, **characterized in that** the forming device (1) comprises a displacement device and an actuator coupled to the displacement device, which actuator is able to move at least one of the die halves (11, 12) relative to the respective other die half to open and close the forming device (1) by exerting pressure, so that the die halves are able to operate as a pressing tool.

4. Forming device (1) according to Claim 3, **characterized in that** the forming device (1) includes a sensor for detecting signals for the force with which the die parts are closed, and that the function module is functionally connected to the sensor and calculates signals for controlling the actuator of the displacement device on the basis of setpoint forces for closing the die parts relative to each other and transmits the signals thereto, by which signals the setpoint force is kept within predetermined limits.

5. Forming device (1) according to any one of the preceding claims, **characterized in that** the temperature sensor is a pyrometer or a thermocouple.

6. Forming device (1) according to any one of the preceding claims, **characterized in that** the heating device includes an induction device with which the semi-finished product can be heated.

7. Forming device (1) according to one of the preceding claims, **characterized in that** the forming device (1) includes a second heating device for a reshaping region (52) and a third heating device for a curing region (53) located on the outlet region (A), wherein the reshaping region (52) is arranged before the during region (53) when viewed in the feed direction (V), and that one temperature sensor each is arranged on the reshaping region and the curing region (53), which temperature sensors are connected to control and and regulating device, and the function module thereof has a temperature controller and actuator for the second and third heating devices.

8. Forming device (1) according to any one of the preceding claims, **characterized in that** the displacement device is embodied such that the position of the die parts (11a, 12b) can be adjusted relative to each other with the die parts (11a, 12b) in the closed position in order to change the shape of the pultrusion channel (10).

9. Forming device (1) according to any one of the preceding claims, **characterized in that** the functional module of the control and regulating device has a function with which the die parts (11a, 12a) are moved apart and together again at predetermined times or times determined by the control and regulating device, wherein when the die parts (11a, 12a) are open the movement of the semi-finished product is effected at a predetermined speed by transmission of a command to the drive device, and when the die parts (11a, 12a) are closed the movement of the semi-finished product (2) is halted by transmission of a command to the drive device.

10. Apparatus according to any one of the preceding claims, **characterized in that** the lateral edge portions of the semi-finished product (2) are guided by guide tracks at least in the region of the die.

11. Apparatus according to Claim 10, **characterized in that** the guide tracks are arranged outside the tool.

12. System (A) for producing a profiled semi-finished fibre reinforced composite (FRC) from a semi-finished product (2) made of dry fibre or prepreg material including a forming device (1) according to any one of the preceding claims and a drive device for feeding the semi-finished product (2) into the forming device (1) .

13. Method for producing a profiled semi-finished fibre reinforced composite (FRC) from a semi-finished product (2) made of dry fibre or prepreg material, which is moved in the longitudinal direction (L) thereof through a forming device (1),
• with a passage of the semi-finished product (2) in the longitudinal direction (L) of a forming device (1) between the opposing forming contours of die parts (11a, 12a), of which the forming contours of the cross-sections of the die parts (11a, 12a) change progressively from a cross-sectional contour in the inlet region to a cross-sectional contour in the outlet region, and
the method is **characterized in that**
the semi-finished product is moved on a carrier film, and causing a bearing part in the infeed region of the forming device (2) to vibrate in such manner that the frictional heat thus generated between the bearing part and the semi-finished product brings the semi-finished product into a formable state, wherein the speed of movement of the semi-finished product (2) is regulated as a function of the temperature of the semi-finished product (2).

14. Method according to Patent Claim 13, **characterized in that** the die parts (11a, 12a) are opened and returned to their forming distance at time intervals during the continuous movement of the semi-finished product, wherein the opening and closing of the forming device (1) is effected in response to opening and closing commands by a control and regulating device as a function the speed of the feed movement (V).

15. Method according to Patent Claim 13, **characterized in that** the forming device (1) is opened in response to opening and closing commands from a control and regulating device as a function of at least one measured temperature and is closed with a predetermined pressing force, wherein the movement of the is semi-finished stopped while the forming device (1) is in the closed state.

16. Method according to Patent Claim 15, **characterized in that** the temperatures in an infeed region (51), a main forming zone (52) and a curing zone (53) area controlled on the basis of time and/or temperature while the movement of the semi-finished product (2) is paused.

17. Method according to any one of Patent Claims 13 to 16, **characterized in that** the semi-finished product (2) is reshaped from an initial state to an omega profile (hat profile) as it is moved through the forming device (1).

## Revendications

1. Dispositif de déformation (1) pour transformer un produit semi-fini (2) plat en un produit semi-fini en matériau renforcé par fibres (FVW) profilé, présentant :
• une moitié d'outil inférieure (11) comprenant une première surface de déformation (11a) et une moitié d'outil supérieure (12) comprenant une seconde surface de déformation (12a) tournée vers la première surface de déformation (11a), qui forment un canal de pultrusion (10) pour faire traverser un produit semi-fini dans un sens d'avancement (V), dans lequel les contours des sections transversales des surfaces de déformation (11a, 12a) passant transversalement au sens d'avancement (V) du produit semi-fini se modifient continuellement d'un contour (KE) placé dans la zone d'entrée (E) du dispositif de déformation (1) en un contour (KA) placé dans la zone de sortie (A) du dispositif de déformation (1), de sorte que le produit semi-fini déplacé au travers du dispositif de déformation (1) peut être amené d'une première section transversale de profilé à une section transversale de profilé nominale dans la zone de sortie (A),
• un dispositif de chauffage placé dans la zone d'introduction (51) disposée derrière la zone d'entrée (E) vu dans le sens d'avancement,
**caractérisé en ce que**
le dispositif de chauffage dans la zone d'entrée est un dispositif à vibrations avec une partie d'appui pouvant être mise en vibration, avec laquelle une partie d'au moins une surface de déformation (11a, 12a) peut être mise en vibration pour réchauffer le produit semi-fini au moyen de la chaleur de frottement, et
que le dispositif de déformation (1) présente :
• un dispositif de commande et de régulation qui présente un dispositif de pilotage pour régler le dispositif de chauffage et qui est relié de manière fonctionnelle au dispositif de chauffage disposé dans la zone d'introduction (51) ainsi qu'à un capteur de température disposé dans la zone d'introduction (51) pour recevoir des valeurs de température et dans lequel est implémenté un module fonctionnel avec une fonction de régulation pour réguler la température dans la zone d'introduction (E) qui calcule des signaux de pilotage à transmettre au dispositif de chauffage et les envoie à celui-ci en se basant sur les valeurs de température et une température nominale dans la zone d'entrée, pour régler la température dans la zone d'introduction (5).

2. Dispositif de déformation (1) selon la revendication 1, **caractérisé en ce que** celui-ci présente un dispositif d'entraînement pour créer un mouvement d'avancement du produit semi-fini (2) dans le dispositif de déformation (1) et que le dispositif de commande et de régulation est relié de manière fonctionnelle à un dispositif d'entraînement pour créer un mouvement d'avancement du produit semi-fini (2) dans le dispositif de déformation (1) et du fait des valeurs de température et d'une température de consigne dans la zone d'entrée, calcule des signaux de pilotage pour le dispositif d'entraînement et les envoie à celui-ci pour créer un mouvement d'avancement du produit semi-fini (2) dans le dispositif de déformation (1).

3. Dispositif de déformation (1) selon la revendication 1 ou 2, **caractérisé en ce que** le dispositif de déformation (1) présente un dispositif de déplacement et un servomoteur couplé au dispositif de déplacement, qui peut déplacer au moins une des moitiés d'outil (11, 12) en exerçant une pression par rapport à l'autre moitié de moule respective pour ouvrir et fermer le dispositif de déformation (1) de sorte que les moitiés d'outil puissent fonctionner comme outil de pressage.

4. Dispositif de déformation (1) selon la revendication 3, **caractérisé en ce que** le dispositif de déformation (1) présente un capteur pour détecter des signaux pour la force avec laquelle les moitiés d'outil sont fermées et que le module fonctionnel est relié de manière fonctionnelle au capteur et calcule des signaux relatifs entre eux pour piloter le servomoteur du dispositif de déplacement et les envoie à celui-ci en se basant sur les forces nominales pour la fermeture des moitiés d'outil, avec lesquels la force nominale est maintenue dans des limites prédéfinies.

5. Dispositif de déformation (1) selon l'une des revendications précédentes, **caractérisé en ce que** le capteur de température est un pyromètre ou un élément thermique.

6. Dispositif de déformation (1) selon l'une des revendications précédentes, **caractérisé en ce que** le dispositif de chauffage présente un dispositif d'induction avec lequel le produit semi-fini peut être réchauffé.

7. Dispositif de déformation (1) selon l'une des revendications précédentes, **caractérisé en ce que** le dispositif de déformation (1) présente un deuxième dispositif de chauffage pour une zone de déformation (52) ainsi qu'un troisième dispositif de chauffage pour une zone de durcissement (53) disposée sur la zone de sortie (A), dans lequel la zone de déformation (52) est disposée devant la zone de durcissement (53) vu dans le sens d'avancement (V), et que sur la zone de déformation et sur la zone de durcissement (53), un capteur de température respectif est disposé qui est relié au dispositif de commande et de régulation et le module fonctionnel de celui-ci présente une régulation de température et un pilotage des deuxième et troisième dispositif de chauffage.

8. Dispositif de déformation (1) selon l'une des revendications précédentes, **caractérisé en ce que** le dispositif de déplacement (1) est ainsi conçu que la position des moitiés d'outil (11a, 12b) lorsque les moitiés d'outil (11a, 11b) sont fermées peut être réglée l'une par rapport à l'autre pour modifier la forme du canal de pultrusion (10).

9. Dispositif de déformation (1) selon l'une des revendications précédentes, **caractérisé en ce que** le module fonctionnel du dispositif de commande et de régulation présente une fonction avec laquelle à des moments prédéfinis ou définis par le dispositif de commande et de régulation, les moitiés d'outil (11a, 12a) sont éloignées l'une de l'autre et de nouveau rapprochées, dans lequel lorsque les moitiés d'outil (11a, 12a) sont éloignées l'une de l'autre, le mouvement du produit semi-fini s'effectue à une vitesse prédéfinie par pilotage du dispositif d'entraînement et lorsque les moitiés d'outil (11a, 12a) sont rapprochées, le mouvement du produit semi-fini (2) est arrêté par pilotage du dispositif d'entraînement.

10. Dispositif selon l'une des revendications précédentes, **caractérisé en ce que** des tronçons de bord latéraux du produit semi-fini (2) sont dirigés au moins au niveau de l'outil au moyen de trajectoires de guidage.

11. Dispositif selon la revendication de brevet 10, **caractérisé en ce que** les trajectoires de guidage sont disposées hors de l'outil.

12. Installation (A) pour la fabrication d'un produit semi-fini en matériau renforcé par fibres (FVW) profilé d'un produit semi-fini (2) en matériau de fibres sèches ou pré-imprégné, présentant un dispositif de déformation (1) selon l'une des revendications précédentes et un dispositif d'entraînement pour diriger le produit semi-fini (2) dans le dispositif de déformation (1).

13. Procédé pour la fabrication d'un produit semi-fini en matériau renforcé par fibres (FVW) profilé d'un produit semi-fini (2) en matériau de fibres sèches ou pré-imprégné, qui est déplacé dans son sens longitudinal (L) à travers un dispositif de déformation (1),
• comprenant une traversée du produit semi-fini (2) dans le sens longitudinal (L) d'un dispositif de déformation (1) entre les contours de déformation orientés l'un vers l'autre de moitiés d'outil (11a, 12a), dont les contours de déformation des sections transversales des moitiés d'outil (11a, 12a) se modifient continuellement d'un contour de section transversale dans la zone d'entrée en un contour de déformation dans la zone de sortie, et
le procédé est en outre **caractérisé en ce que**
le produit semi-fini est déplacé sur un film porteur, avec une mise en vibration d'une partie d'appui dans la zone d'introduction du dispositif de déformation (1) de telle façon que du fait de la chaleur de frottement produite entre la partie d'appui et le produit semi-fini, le produit semi-fini est mis dans un état déformable, dans lequel la vitesse du mouvement du produit semi-fini (2) est régulée en fonction d'une température du produit semi-fini (2).

14. Procédé selon la revendication de brevet 13, **caractérisé en ce que** les moitiés d'outil (11a, 12a), pendant le déplacement continu du produit semi-fini, sont ouvertes par intervalles et de nouveau amenées à leur état déformable, dans lequel l'ouverture et la fermeture du dispositif de déformation (1) s'effectue en fonction de la vitesse du mouvement d'avancement (V) du fait de commandes d'ouverture et de fermeture par un dispositif de commande et de régulation.

15. Procédé selon la revendication de brevet 13, **caractérisé en ce que** le dispositif de déformation (1) est ouvert et fermé avec une force de pression prédéfinie en fonction d'au moins une température mesurée du fait de commandes d'ouverture et de fermeture par un dispositif de commande et de régulation, dans lequel le mouvement du produit semi-fini est arrêté pendant que le dispositif de déformation (1) est fermé.

16. Procédé selon la revendication de brevet 15, **caractérisé en ce que** pendant l'arrêt du mouvement du produit semi-fini (2), les températures dans une zone d'introduction (51), une zone de transformation principale (52) et une zone de durcissement (53) sont régulées en fonction du temps et/ou de la température.

17. Procédé selon l'une des revendications de brevet 13 à 16, **caractérisé en ce que** le produit semi-fini (2) est déformé d'un état de départ en un profilé en oméga (profilé chape) en traversant le dispositif de déformation (1).
